# EUROPEAN PATENT SPECIFICATION

(11) **EP 3 922 846 B1**
(45) Date of publication and mention of the grant of the patent: **19.06.2024**
(21) Application number: 21178849.2
(22) Date of filing: 10.06.2021
(51) Int. Cl.: F03D 13/25, F03D 80/80, F03D 13/10

(54) **METHOD AND DEVICES FOR ARRANGING AN ELECTRICAL CABLE IN A FOUNDATION OF AN OFFSHORE WIND TURBINE**
VERFAHREN UND VORRICHTUNGEN ZUR ANORDNUNG EINES ELEKTRISCHEN KABELS IN EINEM FUNDAMENT EINER OFFSHORE-WINDTURBINE
PROCÉDÉ ET DISPOSITIFS PERMETTANT DE DISPOSER UN CÂBLE ÉLECTRIQUE DANS UNE FONDATION D'ÉOLIENNE EN MER

(30) Priority: 11.06.2020 BE 202005423
(43) Date of publication of application: 15.12.2021
(73) Proprietor: DEME Offshore BE NV, 2070 Zwijndrecht (BE)
(72) Inventor: RABAUT, Dieter Wim Jan, 9000 Gent (BE); VAN LOON, Peter Petronella Aloisius, 2910 Essen (BE)
(74) Representative: Arnold & Siedsma

(56) References cited:
- EP-A1- 2 597 738
- EP-A1- 3 438 449
- EP-A1- 3 502 533
- EP-A1- 3 761 467
- EP-A2- 2 732 516

## Description

### TECHNICAL FIELD OF THE INVENTION

The invention relates to a method for arranging an electrical cable in a foundation of an offshore wind turbine for the purpose of connection to an electrical installation. The invention likewise relates to a transition piece for application in the method, and a foundation pile for application in the method. The transition piece is configured to connect a tower of an offshore wind turbine to the foundation pile.

### BACKGROUND OF THE INVENTION

An offshore wind turbine is generally placed on a foundation anchored to a seabed. For offshore wind turbines which are placed in relatively shallow water the foundation can comprise a foundation pile arranged in the seabed, also referred to as monopile. A lattice structure or jacket can, if desired, be applied for deeper water. In order to connect the wind turbine tower to a monopile use is in the prior art made of a transition piece (TP). The transition piece is connected on a lower side thereof to the monopile and on an upper side thereof to the wind turbine tower. The transition piece can, if desired, be provided with add-on constructions such as a work platform, a jetty and other useful applications, and can also comprise the equipment required for the operation of the wind turbine, including electrical equipment, such as transformers, switchgear, converters and the like. The electricity generated by the wind turbine is transported with an electrical cable. To enable connection of the wind turbine to an electrical installation in the vicinity of the wind turbine an electrical cable is generally arranged in the foundation of an offshore wind turbine from below. The electrical cable can for instance be introduced from a cable-laying vessel via a cable entry opening provided on an lower side of the foundation pile in a peripheral wall of the foundation pile. A length of the electrical cable placed into the foundation is then pulled further through the cable entry opening into the foundation using a messenger wire, and electrically connected.

EP2732516A2, EP3502533A1 and EP3761467A1 are relevant examples of prior art.

### SUMMARY OF THE INVENTION

The object of the present invention is to provide a method whereby an electrical cable can be arranged in a foundation of an offshore wind turbine for the purpose of connection to an electrical installation in a more efficient manner than known. A further object is to provide a transition piece and a foundation pile which enable the method.

According to the invention, this object is achieved by providing a method according to claim 1. According to the invention, a method is provided for arranging an electrical cable in a foundation of an offshore wind turbine, wherein
a) an internally hollow transition piece TP provided on an upper side of a mounting means (flange) for the wind turbine is connected to an internally hollow foundation pile MP arranged in an underwater bottom;
b) free outer ends of a TP messenger wire arranged in the transition piece and an MP messenger wire arranged in the foundation pile are mutually connected;
c) the TP messenger wire is attached with a haul-in cable end to a haul-in cable;
d) the MP messenger wire is attached with a traction cable end to a traction cable, lowered underwater from a cable-laying vessel, via a cable entry opening provided on a lower side of the foundation pile in a peripheral wall of the foundation pile, and is pulled with the traction cable toward the cable-laying vessel;
e) the MP messenger wire or the traction cable is connected to an electrical cable present on the cable-laying vessel;
f) the mutually connected messenger wires and the electrical cable are pulled with the haul-in cable through the cable entry opening into the foundation until a length of the electrical cable has been placed into the foundation;
wherein the internal cavities of the transition piece and the foundation pile are provided prior to step a) with respectively the TP and MP messenger wire.

With the invented method the duration of the offshore operations can be shortened considerably, among other reasons because some of the operations can take place onshore. In addition, it is no longer necessary to employ a second working vessel for installation of the electrical cable and of any messenger wires. The risk of damage to the electrical cable, the messenger wires and any equipment which may be present on or in the transition piece and the foundation pile can further be reduced.

These advantages are achieved to greater extent in an embodiment of the method wherein the internal cavities of the transition piece and the foundation pile are provided with respectively the TP and MP messenger wire onshore prior to step a).

In order to facilitate connection in step b) of the free outer ends of a TP messenger wire arranged in the transition piece and an MP messenger wire arranged in the foundation pile the TP and/or the MP messenger wire are arranged with an excess in respectively the transition piece and the foundation pile in an embodiment of the method.

In step a) the transition piece can be placed with lifting means on the foundation pile and be connected thereto, for instance by means of bolts or with a grouted connection. A further advantage of embodiments of the invented method is that, after the transition piece is connected in step a) to an internally hollow foundation pile arranged in an underwater bottom, the thus created foundation is already provided with pre-arranged messenger wires which are available for the intended purpose, namely arranging an electrical cable in a foundation of an offshore wind turbine in efficient manner.

It is advantageous when, in an embodiment of the method, a lower floor of the transition piece forms an airtight floor after step a) and connects to a stop provided on an internal peripheral wall of the foundation pile, and the TP messenger wire runs from a first attachment point on an upper side of the airtight floor, through a closable opening in the airtight floor to a second attachment point on an underside of the airtight floor, wherein the free end of the TP messenger wire is obtained by releasing the TP messenger wire from the second attachment point.

In another practical embodiment of the invention the airtight floor comprises a hatch in the vicinity of the second attachment point, and the TP messenger wire is released from an upper side of the airtight floor via the opened hatch, for instance by a robot or by personnel, preferably provided with fall restraint means, present on the airtight floor.

In yet another embodiment the MP messenger wire extends from a lower attachment point to an upper attachment point which is located above an internal stop, provided on the peripheral wall, for the airtight floor of the transition piece, and the free outer end of the MP messenger wire is obtained by releasing the MP messenger wire from the upper attachment point.

A further improved embodiment relates to a method wherein an upper floor of the transition piece is configured to couple a wind turbine tower to an upper side of the transition piece, and the TP messenger wire hangs down from the first attachment point through the closable opening via a hoist mounted on an underside of the upper floor.

The number of floors in the transition piece can otherwise in principle be chosen freely and, if desired, the transition piece can comprise more floors than the upper floor and the airtight floor. Three or more floors placed vertically above each other and supported by upright support(s) can thus be provided. Such a transition piece is able to accommodate the wind turbine equipment required for a good operation of the wind turbine, and if desired wholly, which prevents such equipment also having to be accommodated partially in the foundation pile and/or the wind turbine tower.

The upper floor of the transition piece is configured to couple a wind turbine tower to an upper side of the transition piece, for instance via a flange/bolt connection. This is understood to mean that the upper floor comprises the provisions necessary for said connection, and is also accessible to personnel having to form the connection. If desired, the floors of the transition piece can comprise passages for an electrical cable or other electrical cable connections.

The airtight (lower) floor of the transition piece is provided along a peripheral edge with sealing means configured to realize a substantially airtight seal with the internal peripheral wall of the foundation pile. The substantially airtight seal ensures that, after the transition piece has been placed on the foundation pile, the portion above the lower floor is sealed substantially airtightly from the spaces lying below the airtight lower floor, which are generally relatively damp. The seal contributes to the durability of the offshore wind turbine, and corrosion is in particular delayed. The sealing means can take any desired form, for instance that of rubber profiles.

In an embodiment in which the transition piece comprises two floors the upper floor functions as coupling floor, and the lower floor preferably has the combined function of airtight floor and switching floor, i.e. a floor on which electrical equipment is located. In an embodiment with two floors a part of the electrical equipment, for instance the switchgear, can if desired be situated in the foundation pile and/or in the wind turbine tower.

In step c) of the method the TP messenger wire is attached with a haul-in cable end to a haul-in cable. For this purpose a free cable end must be obtained. In an embodiment of the method this is done by releasing the TP messenger wire from the first attachment point.

In step d) of the method the MP messenger wire is attached with a traction cable end to a traction cable, lowered underwater from a cable-laying vessel, via a cable entry opening provided on a lower side of the foundation pile in a peripheral wall of the foundation pile. A free MP messenger wire end must be obtained for this purpose. In an embodiment of the method this is done in that the MP messenger wire extends to a lower attachment point which is located below the cable entry opening and by releasing the MP messenger wire from the lower attachment point. The MP messenger wire (with the TP messenger wire and the haul-in cable connected thereto) is then pulled with the traction cable toward the cable-laying vessel. In step e) of the method the MP messenger wire or the traction cable is then connected to an electrical cable which is present on the cable-laying vessel and which must be pulled into the foundation. The connection between the traction cable and the electrical cable can be made in known manner. The same applies to the connection between the electrical cable and the MP messenger wire. The electrical cable can be rolled up on a reel or other suitable storage means on deck or below deck of the cable-laying vessel.

In yet another embodiment of the method the MP messenger wire runs across the cable entry opening, between the lower attachment point and a middle attachment point located above the cable entry opening, and the traction cable end of the MP messenger wire is obtained in step d) by also releasing the MP messenger wire from the middle attachment point.

The releasing from the lower and/or the middle attachment point can be facilitated by providing an embodiment of the method wherein the lower and/or the middle attachment point forms a weak connection which can be broken, and the MP messenger wire is released from the lower and/or middle attachment point by breaking off the lower and/or middle attachment point.

Breaking off the weak connection can take place in many ways. A practical embodiment relates to a method wherein in step e) the traction cable exerts such a tensile force on the lower and/or middle attachment point in the direction of the cable-laying vessel that at least one of them breaks off.

Step d) of the inventive method requires the MP messenger wire to be attached to a traction cable end of the traction cable. According to an embodiment, this can be done by attaching the MP messenger wire to the traction cable end by means of a remotely operated tool, such as an ROV.

In order to facilitate handling of the MP messenger wire a part of the MP messenger wire which lies in front of the cable entry opening comprises in another embodiment a loop, to which a gripper means such as a so-called monkey's fist is attached if desired.

In step f) of the invented method the mutually connected messenger wires, haul-in cable and optionally also the traction cable (in an embodiment in which the electrical cable is connected to the traction cable) are pulled through the cable entry opening with the haul-in cable until a length of the electrical cable has been placed into the foundation. The haul-in cable is here preferably rolled up from a winch setup provided on a work platform of the transition piece. The length of the electrical cable to be pulled into the foundation must be sufficiently great to be able to connect the electrical cable to the electrical equipment present in the foundation and/or wind turbine tower. The necessary tensile force is transferred by the haul-in cable. In a useful embodiment the traction cable is taken in in step e) from a winch setup provided on a deck of a cable-laying vessel, optionally via a capstan provided on the deck. This setup is particularly suitable for a large transfer of force.

According to another aspect of the invention, a transition piece is also provided for application in the inventive method, wherein the transition piece comprises in an internal cavity thereof a TP messenger wire, wherein a lower floor of the transition piece forms an airtight floor after connection to a stop provided on an internal peripheral wall of the foundation pile, and the TP messenger wire runs from a first attachment point on an upper side of the airtight floor, through a closable opening in the airtight floor to a second attachment point on an underside of the airtight floor. The TP messenger wire is connected at attachment points to internal wall parts of the transition piece. The transition piece is configured to connect a tower of an offshore wind turbine to a foundation pile, particularly to an upper portion of such a foundation pile protruding above the underwater bottom. Such an upper portion of a foundation pile preferably extends from an upper edge of the foundation pile over a distance of a maximum of 50% of the overall length of the foundation pile, more preferably a maximum of 40%, still more preferably a maximum of 30%, and most preferably a maximum of 20%.

In an embodiment of the transition piece it comprises on an upper side thereof a mounting means, such as a flange, for a wind turbine. Once the transition piece has been placed on a foundation of a wind turbine, a tower of the wind turbine is placed on the transition piece using a lifting means, wherein the mounting means is coupled to a corresponding mounting means provided on an underside of the tower. Suitable mounting means comprise two peripheral flanges which are provided with holes distributed over the periphery and which are placed against each other, wherein corresponding holes are placed opposite each other. The connection can then be realized by placing bolts through the holes and fastening them with nuts.

Yet another embodiment is characterized in that an upper floor of the transition piece is configured to couple a wind turbine tower to an upper side of the transition piece, and the TP messenger wire hangs down from the first attachment point through the closable opening via a hoist mounted on an underside of the upper floor.

A practical embodiment relates to a transition piece wherein the airtight floor comprises a hatch in the vicinity of the second attachment point. The hatch improves the accessibility of the TP messenger wire for the personnel present on the airtight floor.

The advantages of the above stated embodiments of the transition piece have already been elucidated in the context of the method.

According to yet another aspect of the invention, a foundation pile is provided for application in the invented method, wherein the foundation pile comprises in an internal cavity thereof an MP messenger wire, wherein the MP messenger wire extends from a lower attachment point to an upper attachment point which is located above an internal stop, provided on a peripheral wall, for an airtight floor of the transition piece. The MP messenger wire is connected at attachment points to internal wall parts of the foundation pile.

In yet another embodiment of the foundation pile the lower attachment point is located below a cable entry opening provided on a lower side of the foundation pile in a peripheral wall of the foundation pile.

Another embodiment provides a foundation pile wherein the MP messenger wire runs from the lower attachment point across the cable entry opening via a middle attachment point which is located above the cable entry opening.

A foundation pile wherein an excess of the MP messenger wire is provided beyond the upper attachment point forms another embodiment of the invention.

An embodiment of the foundation pile which further shortens the operations to be performed has the feature that the lower and middle attachment point form a weak connection which can be broken, for instance by a traction cable of a cable-laying vessel which is connected to the MP messenger wire.

In order to be able to engage the MP messenger wire more easily, and to for instance be able to connect it to a traction cable, a foundation pile according to an embodiment is provided wherein the part of the MP messenger wire which is located in front of the cable entry opening comprises a loop.

The advantages of the above stated embodiments of the foundation pile have already been elucidated in the context of the method.

Finally, it is stated that the embodiments of the invention described in this patent application can be combined in any possible combination of these embodiments, and that each embodiment can individually form the subject-matter of a divisional patent application.

### BRIEF DESCRIPTION OF THE FIGURES

The invention will now be further elucidated on the basis of the following figures and description of a preferred embodiment, without the invention otherwise being limited thereto. In the figures:
Fig. 1 is a schematic perspective view of an offshore wind turbine on a monopile foundation, with a detail of a transition piece;
Fig. 2 is a schematic view of an embodiment of a work platform of the wind turbine connected to the transition piece of the monopile;
Fig. 3 is a schematic cross-section of a foundation pile according to an embodiment of the invention;
Fig. 4 is a schematic cross-section of a lower part of the foundation pile shown in figure 2 according to an embodiment of the invention;
Fig. 5 is a schematic cross-section of a transition piece according to an embodiment of the invention;
Fig. 6 is a schematic cross-section of a lower part of the transition piece shown in figure 5 according to an embodiment of the invention in a situation in which it is coupled to a foundation pile, wherein step b) of the method is illustrated;
Fig. 7 is a schematic cross-section of a transition piece and a foundation pile according to an embodiment of the invention coupled thereto; and, finally
Fig. 8 is a schematic side view of a cable-laying vessel and a foundation according to an embodiment of the invention, wherein step e) of the method is illustrated.

### DESCRIPTION OF EXEMPLARY EMBODIMENTS

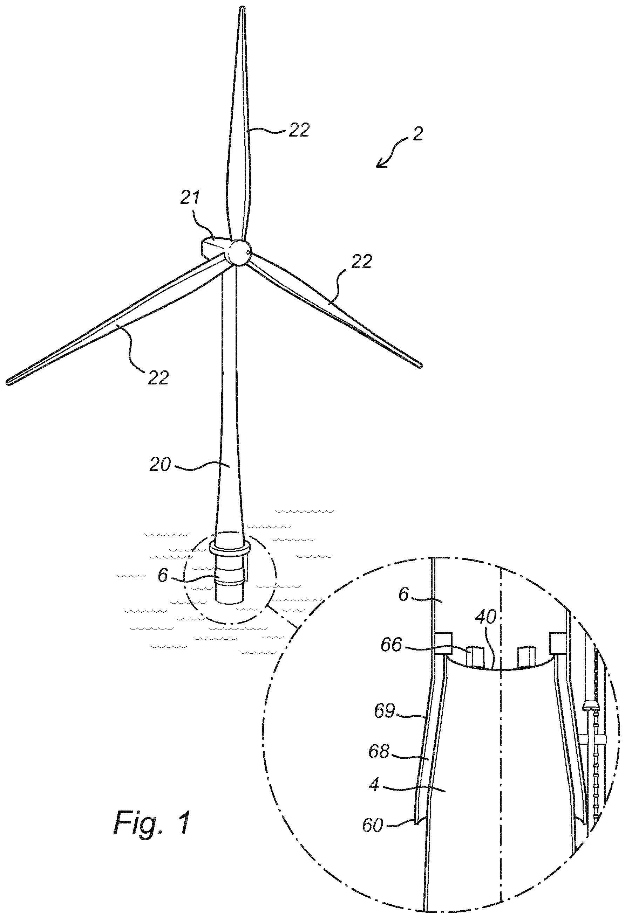

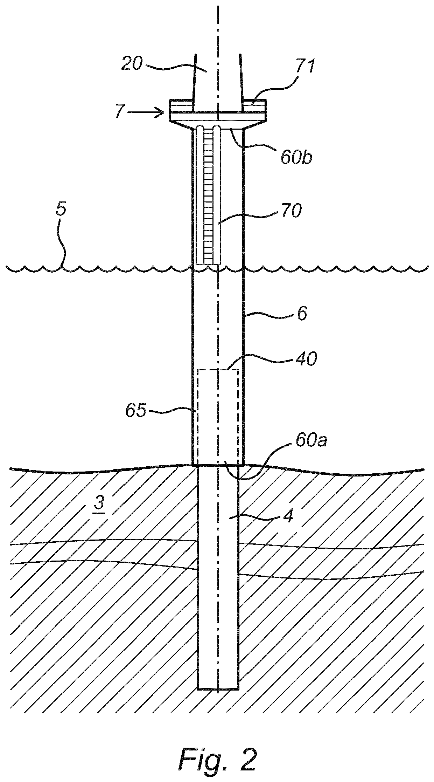

Referring to figure 1, an offshore wind turbine 2 is shown. The turbine 2 comprises a turbine mast 20 which is provided on an upper side with a nacelle 21 and a number of rotor blades 22. As also shown in figure 2, such a wind turbine 2 is placed on a support structure in the form of a monopile 4 anchored to a seabed 3. The monopile 4 forms a tubular element and can extend from seabed 3 to a position above the water surface 5, but can also be situated with an upper edge 40 under water, as shown in figure 2. To connect wind turbine mast 20 to a monopile 4 use can be made of a transition piece 6. Transition piece 6 likewise forms a tubular element and extends from a bottom part 60a to a top part 60b. According to the detail drawing of figure 1, transition piece 6 can be provided with a skirt part 69 which is moved over a top part of monopile 4, wherein an intermediate space 68 is created between an inner surface of the transition piece (6, 69) and an outer surface of the monopile 4. The height of intermediate space 68 can, if desired, be determined by providing an inner surface of the transition piece (6, 69) with protrusions 66 which find support on an upper edge 40 of monopile 4. Space 68 can then be filled with a curing substance such as grouting mortar or grout. After curing, a connection is in this way obtained between transition piece 6 and monopile 4. It is also possible to connect transition piece 6 to monopile 4 by mutually connecting corresponding flanges of transition piece 6 and monopile 4 by means of bolts.

According to figure 2, transition piece 6 (or monopile 4) can, if desired, be provided with a work platform 7 with boat ladder 70 and railing 71.

According to the invention, the basic principle is that as many operations as possible are performed onshore. The invention provides a solution for the fact that the (offshore) installation of messenger wires on an outer side of a monopile and/or transition piece is risky. Both during installation and during retrieval of a messenger wire there is a risk of the messenger wire becoming entangled in auxiliary constructions, such as an ICCP anode cage, arranged on an outer side of the monopile and/or transition piece. The invention therefore relates to a (pre-)installation of a messenger wire on an inner side of a monopile (MP) 4 and/or a transition piece (TP) 6.

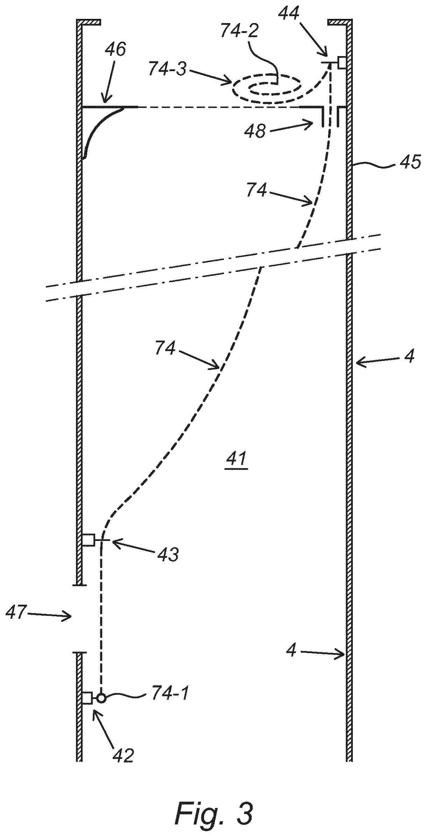

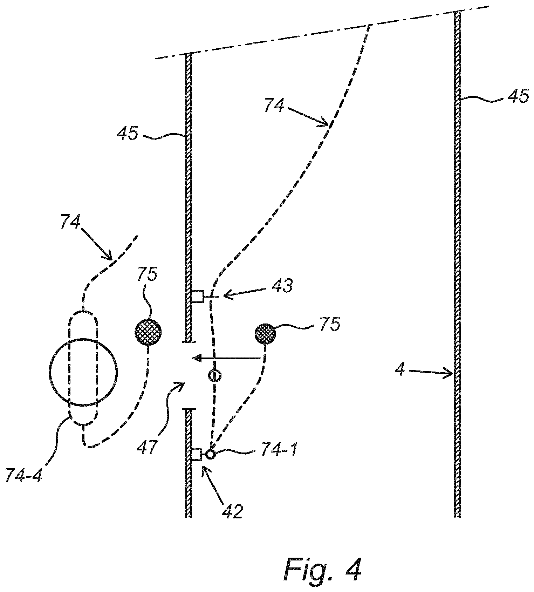

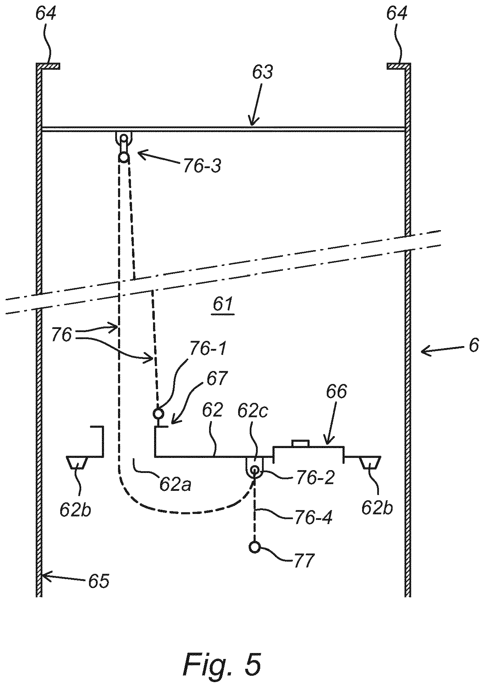

Referring to figures 3 and 4, a monopile 4 is shown which can be applied in an embodiment of the invented method. Monopile 4 comprises in an internal cavity 41 thereof an MP messenger wire 74. The MP messenger wire 74 extends from a lower attachment point 42 to an upper attachment point 44. The upper attachment point 44 is located above an internal peripheral stop 46, provided on a peripheral wall 45 of monopile 4, for an airtight floor 62 (shown in figure 5) of transition piece 6, at a location accessible after monopile 4 has been installed offshore. If desired, the MP messenger wire 74 can run through a drainage opening 48 of stop 46. The lower attachment point 42 is located below a cable entry opening 47 provided on a lower side of monopile 4 in the peripheral wall 45 of monopile 4. In the shown embodiment MP messenger wire 74 runs from the lower attachment point 42 across cable entry opening 47 via a middle attachment point 43 located above cable entry opening 47. The attachment points (42, 43, 44) are connected fixedly to the peripheral wall 45 of monopile 4, for instance by welding.

The length of the MP messenger wire 74 can be chosen such that an excess 74-3 of the MP messenger wire 74 is provided between the upper attachment point 44 and an upper outer end 74-2 of the MP messenger wire 74. Sufficient excess wire length 74-3 will be provided to enable later connection to a transition piece 6. The excess wire length 74-3 can further be secured so as to prevent the combined messenger wire (74, 76) from being lost during manipulations.

According to step d) of the invented method, the MP messenger wire 74 is attached with a traction cable end 74-1 to a traction cable 10, lowered underwater from a cable-laying vessel 1, via cable entry opening 47. This can for instance be done by a remotely operated vehicle or ROV 11. For control thereof, ROV 11 is connected by means of an umbilical 12 to cable-laying vessel 1, and can further be provided with a gripper 11a. In order to facilitate gripping of the MP messenger wire 74 by the gripper 11a of ROV 11 the MP messenger wire 74 can be provided on a lower side thereof with a loop 74-4 and a monkey's fist 75 attached thereto.

When pulling out the MP messenger wire 74 (and the TP messenger wire 76 and electrical cable attached thereto, see below) with traction cable 10, a free traction cable end of the MP messenger wire 74 is obtained in step d) by releasing the MP messenger wire 74 from lower attachment point 42 and middle attachment point 43. This can done in efficient manner by embodying the lower and the middle attachment point (42, 43) such that they form a weak connection which can be broken by the tensile force 10a generated by traction cable 10. The tensile force 10a is generated by a winch 13 present on the deck of cable-laying vessel 1. In this embodiment the MP messenger wire 74 is released from the lower and/or middle attachment point (42, 43) in simple manner by breaking off the lower and/or middle attachment point (42, 43). The weakening can for instance be realized by a local reduction of a section of the lower and/or middle attachment point (42, 43).

Referring to figure 5, a transition piece 6 is shown which can be applied in an embodiment of the invented method. According to the invention, transition piece 6 is provided in an internal cavity 61 thereof with a TP messenger wire 76. The internal cavity 61 is enclosed by a peripheral wall 65 of transition piece 6. In the shown embodiment a lower floor of transition piece 6 forms an airtight floor 62, this after connection to a stop 46 provided on the internal peripheral wall 45 of monopile 4. For this purpose airtight floor 62 is provided at outer ends with support points 62b which, in the situation coupled to monopile 4, support on peripheral stop 46. An upper floor 63 of transition piece 6 is configured to couple a wind turbine tower 2 to an upper side of transition piece 6 via a peripheral flange 64.

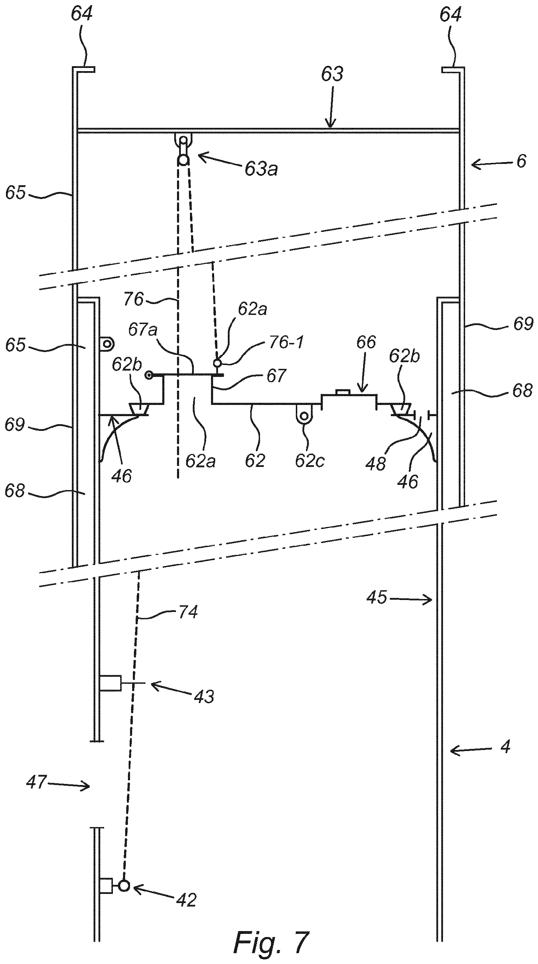

The TP messenger wire 76 runs from a first outer end 76-1, attached to a first attachment point 62a, on an upper side of airtight floor 62 via a hoist 63a mounted on an underside of upper floor 63, through a closable opening 62a in airtight floor 62 to a second attachment point 62c which is provided on an underside of the airtight floor 62 and to which a second outer end 76-2 of the TP messenger wire 76 is attached. Airtight floor 62 is further provided with a hatch 66 (shown in closed position in figures 5 and 7) in the vicinity of the second attachment point 44 of monopile 4. The closable opening 62a is surrounded on an upper side by a so-called downward hanging flange 67, on which the first attachment point 62a is mounted. Some free-hanging excess wire length 76-4 is also provided in the TP messenger wire 76 in order to facilitate retrieval of the TP messenger wire 76. This outer end can also be provided with a monkey's fist 77.

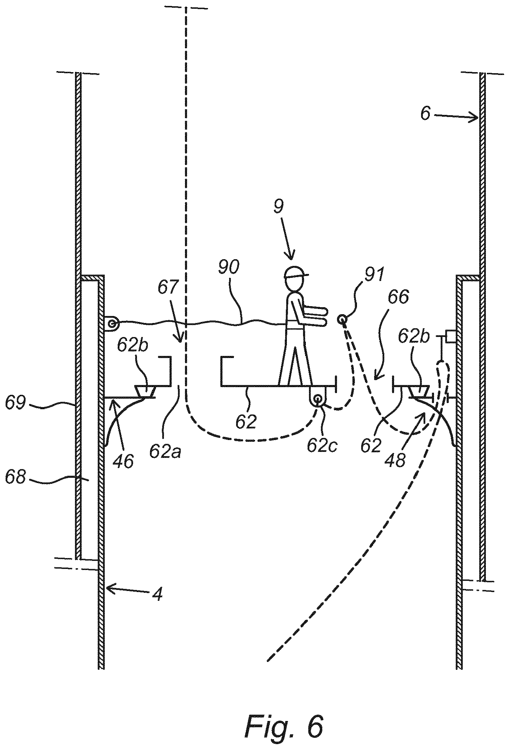

Referring to figures 6 and 7, an assembly of monopile 4 and a transition piece 6 is shown which can be applied in an embodiment of the invented method.

Arranging an electrical cable 14 in a foundation (4, 6) of an offshore wind turbine 2 from a cable-laying vessel 1 for the purpose of connection to an electrical installation (not shown) requires connection of the internally hollow transition piece 6 to the internally hollow monopile 4 already arranged in the underwater bottom 3. Arranging of the monopile 4 in underwater bottom 3 can take place in any manner, for instance by lowering monopile 4 into the water from an installation vessel (not shown) and anchoring it to underwater bottom 3, for instance by pile-driving. Transition piece 6 is then arranged on monopile 4 and anchored thereto, for instance by the grouting already described above or by a bolt connection between corresponding flanges of transition piece 6 and monopile 4. This situation is shown in figures 6 and 7.

As shown in figure 6, a free outer end 76-2 (or the outer end of the monkey's fist 77) of the TP messenger wire 76 arranged in transition piece 6 is connected to the free outer end 74-2 of the MP messenger wire 74 arranged in monopile 4. This is done by a person 9 present on the airtight floor 62 who, if desired, can be secured with a fall restraint wire 90. Person 9 opens the hatch 66 in airtight floor 62, and secures it. Person 9 then releases outer end 74-2 from connection point 44, and outer end 76-2 from connection point 62c. Via opened hatch 66 the two outer ends (74-2 and 76-2) are then mutually connected using a connection 91 appropriate for this purpose. In this way a coupled messenger wire (74, 76) is obtained, which runs from the connection point 62a of transition piece 6, via hoist 63a to the lower connection point 42 of monopile 4. Once connected correctly, the coupled messenger wire (74, 76) can be tensioned, as shown in figure 7.

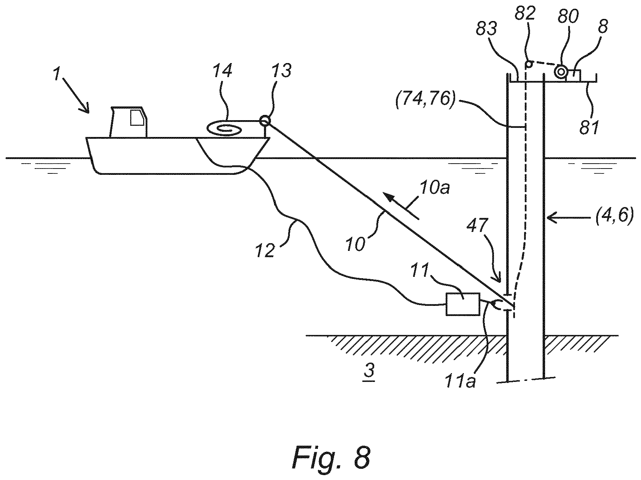

In a step c) of the method the TP messenger wire 76 is released from connection point 62a and the released cable end 76-1 is attached to an outer end of a haul-in cable 80. Haul-in cable 80 is rolled up from a winch setup 8 provided on a work platform 81 of transition piece 6, via a pulley 82 arranged on a cover 83 of transition piece 6 (see figure 8). In this way a connection has been brought about between haul-in cable 80 and the MP messenger wire 74 running across cable entry opening 47.

Referring to figure 8, a cable-laying vessel 1 and a foundation (4, 6) according to an embodiment of the invention are shown, wherein step e) of the method is illustrated, namely the pulling out through cable entry opening 47 of the mutually connected messenger wires (74, 76) and the haul-in cable 80 using the traction cable 10. This is done with a tensile force 10a. In a first embodiment the electrical cable 14 present on vessel 1 is connected in step f) to traction cable 10. In a second embodiment the electrical cable 14 present on vessel 1 is connected in step f) to the MP messenger wire 74. The connected messenger wires (74, 76) are long enough to reach to cable-laying vessel 1. When the mutually connected TP messenger wire 76 and MP messenger wire 74 are pulled in with haul-in cable 80, the electrical cable 14 attached thereto, optionally with interposing of the traction cable 10, is pulled along until a length of electrical cable 80 has been placed via cable entry opening 47 into monopile 4 and, if desired, is connected to an electrical installation (not shown).

## Claims

1. Method for arranging an electrical cable in a foundation of an offshore wind turbine for the purpose of connection to an electrical installation, wherein
a) an internally hollow transition piece TP provided on an upper side of a mounting means (flange) for the wind turbine is connected to an internally hollow foundation pile MP arranged in an underwater bottom;
b) free outer ends of a TP messenger wire arranged in the transition piece and an MP messenger wire arranged in the foundation pile are mutually connected;
c) the TP messenger wire is attached with a haul-in cable end to a haul-in cable;
d) the MP messenger wire is attached with a traction cable end to a traction cable, lowered underwater from a cable-laying vessel, via a cable entry opening provided on a lower side of the foundation pile in a peripheral wall of the foundation pile, and is pulled with the traction cable toward the cable-laying vessel;
e) the MP messenger wire or the traction cable is connected to an electrical cable present on the cable-laying vessel;
f) the mutually connected messenger wires and the electrical cable are pulled with the haul-in cable through the cable entry opening into the foundation until a length of the electrical cable has been placed into the foundation;
wherein the internal cavities of the transition piece and the foundation pile are provided prior to step a) with respectively the TP and MP messenger wire.

2. Method according to claim 1, wherein the internal cavities of the transition piece and the foundation pile are provided with respectively the TP and MP messenger wire onshore prior to step a).

3. Method according to claim 1 or 2, wherein the TP and/or the MP messenger wire are arranged with an excess in respectively the transition piece and the foundation pile.

4. Method according to any one of the foregoing claims, wherein a lower floor of the transition piece forms an airtight floor after step a) and connects to a stop provided on an internal peripheral wall of the foundation pile, and the TP messenger wire runs from a first attachment point on an upper side of the airtight floor, through a closable opening in the airtight floor to a second attachment point on an underside of the airtight floor, wherein the free end of the TP messenger wire is obtained by releasing the TP messenger wire from the second attachment point.

5. Method according to claim 4, wherein the airtight floor comprises a hatch in the vicinity of the second attachment point, and the TP messenger wire is released from an upper side of the airtight floor via the opened hatch.

6. Method according to any one of the foregoing claims, wherein the MP messenger wire extends from a lower attachment point to an upper attachment point which is located above an internal stop, provided on the peripheral wall, for the airtight floor of the transition piece, and the free outer end of the MP messenger wire is obtained by releasing the MP messenger wire from the upper attachment point.

7. Method according to any one of the foregoing claims, wherein the TP and MP messenger wires connected to each other in step b) are tensioned in downward hanging state.

8. Method according to any one of the claims 4-7, wherein an upper floor of the transition piece is configured to couple a wind turbine tower to an upper side of the transition piece, and the TP messenger wire hangs down from the first attachment point through the closable opening via a hoist mounted on an underside of the upper floor.

9. Method according to any one of the claims 4-8, wherein the cable end of the TP messenger wire is obtained by releasing the TP messenger wire from the first attachment point.

10. Method according to any one of the foregoing claims, wherein the MP messenger wire extends to a lower attachment point which is located below the cable entry opening, and the traction cable end of the MP messenger wire is obtained in step d) by releasing the MP messenger wire from the lower attachment point.

11. Method according to claim 10, wherein the MP messenger wire runs across the cable entry opening, between the lower attachment point and a middle attachment point located above the cable entry opening, and the traction cable end of the MP messenger wire is obtained in step d) by also releasing the MP messenger wire from the middle attachment point.

12. Method according to claim 10 or 11, wherein the lower and/or the middle attachment point form a weak connection which can be broken, and the MP messenger wire is released from the lower and/or middle attachment point by breaking off the lower and/or middle attachment point.

13. Method according to any one of the foregoing claims, wherein the MP messenger wire is attached with the traction cable end to the traction cable in step d) by means of a remotely operated tool (ROV).

14. Method according to any one of the foregoing claims, wherein a part of the MP messenger wire which lies in front of the cable entry opening comprises a loop.

15. Method according to any one of the foregoing claims, wherein the haul-in cable is unrolled in step e) from a winch setup provided on a work platform of the transition piece.

16. Method according to any one of the foregoing claims, wherein the traction cable is taken in in step e) from a winch setup provided on a deck of a cable-laying vessel, optionally via a capstan provided on the deck.

17. Method according to any one of the claims 12-16, wherein in step e) the traction cable exerts such a tensile force on the lower and/or middle attachment point that at least one of them breaks off, and preferably both of them do.

18. Transition piece for application in the method according to any one of the claims 1-17, wherein the transition piece comprises in an internal cavity thereof a TP messenger wire, **characterized in that** a lower floor of the transition piece forms an airtight floor after connection to a stop provided on an internal peripheral wall of the foundation pile, and the TP messenger wire runs from a first attachment point on an upper side of the airtight floor, through a closable opening in the airtight floor to a second attachment point on an underside of the airtight floor.

19. Transition piece according to claim 18, wherein an upper floor of the transition piece is configured to couple a wind turbine tower to an upper side of the transition piece, and the TP messenger wire hangs down from the first attachment point through the closable opening via a hoist mounted on an underside of the upper floor.

20. Transition piece according claim 18 or 19, wherein the airtight floor comprises a hatch in the vicinity of the second attachment point.

21. Foundation pile for application in the method according to any one of the claims 1-17, wherein the foundation pile comprises in an internal cavity thereof an MP messenger wire, **characterized in that** the MP messenger wire extends from a lower attachment point to an upper attachment point which is located above an internal stop, provided on a peripheral wall, for an airtight floor of the transition piece.

22. Foundation pile according to claim 21, wherein the lower attachment point is located below a cable entry opening provided on a lower side of the foundation pile in a peripheral wall of the foundation pile.

23. Foundation pile according to claim 21 or 22, wherein the MP messenger wire runs from the lower attachment point across the cable entry opening via a middle attachment point which is located above the cable entry opening.

24. Foundation pile according to any one of the claims 21-23, wherein an excess of the MP messenger wire is provided beyond the upper attachment point.

25. Foundation pile according to claim 23 or 24, wherein the lower and middle attachment point form a weak connection which can be broken.

26. Foundation pile according to any one of the claims 21-25, wherein the part of the MP messenger wire which is located in front of the cable entry opening comprises a loop.

## Patentansprüche

1. Verfahren zum Anordnen eines elektrischen Kabels in einem Fundament einer Offshore-Windkraftanlage zum Zweck der Verbindung mit einer elektrischen Anlage, wobei
a) ein innen hohles Übergangsstück TP, das auf einer Oberseite eines Befestigungsmittels (Flansch) für die Windkraftanlage bereitgestellt ist, mit einem innen hohlen Gründungspfahl MP verbunden ist, der in einem Unterwasserboden angeordnet ist;
b) freie Außenenden eines im Übergangsstück angeordneten TP-Tragseils und eines im Gründungspfahl angeordneten MP-Tragseils miteinander verbunden werden;
c) das TP-Tragseil mit einem Einzugskabelende an einem Einzugskabel befestigt wird;
d) das MP-Tragseil über eine an einer Unterseite des Gründungspfahls in einer Umfangswand des Gründungspfahls vorgesehene Kabeleintrittsöffnung mit einem Zugkabelende an einem von einem Kabelverlegeschiff unter Wasser herabgelassenen Zugkabel befestigt und mit dem Zugkabel in Richtung des Kabelverlegeschiffs gezogen wird;
e) das MP-Tragseil oder das Zugkabel mit einem auf dem Kabelverlegeschiff vorhandenen elektrischen Kabel verbunden wird;
f) die miteinander verbundenen Tragseile und das elektrische Kabel mit dem Einzugskabel durch die Kabeleintrittsöffnung in das Fundament eingezogen werden, bis eine Länge des elektrischen Kabels im Fundament abgelegt ist;
wobei die inneren Hohlräume des Übergangsstücks und des Gründungspfahls vor Schritt a) mit dem TP- bzw. MP-Tragseil versehen werden.

2. Verfahren nach Anspruch 1, wobei die inneren Hohlräume des Übergangsstücks und des Gründungspfahls vor Schritt a) an Land mit dem TP- bzw. MP-Tragseil versehen werden.

3. Verfahren nach Anspruch 1 oder 2, wobei das TP- und/oder das MP-Tragseil jeweils mit Übermaß im Übergangsstück und im Gründungspfahl angeordnet werden.

4. Verfahren nach einem der vorhergehenden Ansprüche, wobei ein unterer Boden des Übergangsstücks nach Schritt a) einen luftdichten Boden bildet und an einen Anschlag anschließt, der an einer inneren Umfangswand des Gründungspfahls bereitgestellt ist, und das TP-Tragseil von einem ersten Befestigungspunkt auf einer Oberseite des luftdichten Bodens durch eine verschließbare Öffnung in dem luftdichten Boden zu einem zweiten Befestigungspunkt auf einer Unterseite des luftdichten Bodens verläuft, wobei das freie Ende des TP-Tragseils durch Lösen des TP-Tragseils von dem zweiten Befestigungspunkt erhalten wird.

5. Verfahren nach Anspruch 4, wobei der luftdichte Boden in der Nähe des zweiten Befestigungspunkts eine Luke aufweist und das TP-Tragseil über die geöffnete Luke von einer Oberseite des luftdichten Bodens freigegeben wird.

6. Verfahren nach einem der vorhergehenden Ansprüche, wobei sich das MP-Tragseil von einem unteren Befestigungspunkt zu einem oberen Befestigungspunkt erstreckt, der sich oberhalb eines an der Umfangswand vorgesehenen inneren Anschlags für den luftdichten Boden des Übergangsstücks befindet, und das freie äußere Ende des MP-Tragseils durch Lösen des MP-Tragseils vom oberen Befestigungspunkt erhalten wird.

7. Verfahren nach einem der vorhergehenden Ansprüche, wobei die in Schritt b) miteinander verbundenen TP- und MP-Tragseile im nach unten hängenden Zustand gespannt werden.

8. Verfahren nach einem der Ansprüche 4 bis 7, wobei ein oberer Boden des Übergangsstücks konfiguriert ist, um einen Windturbinenturm mit einer Oberseite des Übergangsstücks zu koppeln, und das TP-Tragseil über einen an einer Unterseite des oberen Bodens montierten Hebezug vom ersten Befestigungspunkt durch die verschließbare Öffnung herabhängt.

9. Verfahren nach einem der Ansprüche 4 bis 8, wobei das Kabelende des TP-Tragseils durch Lösen des TP-Tragseils vom ersten Befestigungspunkt erhalten wird.

10. Verfahren nach einem der vorhergehenden Ansprüche, wobei sich das MP-Tragseil bis zu einem unteren Befestigungspunkt erstreckt, der sich unterhalb der Kabeleintrittsöffnung befindet, und das Zugkabelende des MP-Tragseils in Schritt d) durch Lösen des MP-Tragseils vom unteren Befestigungspunkt erhalten wird.

11. Verfahren nach Anspruch 10, wobei das MP-Tragseil über die Kabeleintrittsöffnung zwischen dem unteren Befestigungspunkt und einem zentralen Befestigungspunkt, der sich oberhalb der Seileintrittsöffnung befindet, verläuft und das Zugkabelende des MP-Tragseils in Schritt d) erhalten wird, indem das MP-Tragseil ebenfalls vom zentralen Befestigungspunkt gelöst wird.

12. Verfahren nach Anspruch 10 oder 11, wobei der untere und/oder der zentrale Befestigungspunkt eine schwache Verbindung bilden, die unterbrochen werden kann, und das MP-Tragseil durch Abbrechen des unteren und/oder zentralen Befestigungspunkts vom unteren und/oder zentralen Befestigungspunkt gelöst wird.

13. Verfahren nach einem der vorhergehenden Ansprüche, wobei das MP-Tragseil in Schritt d) mittels eines ferngesteuerten Werkzeugs (ROV) mit dem Zugkabelende am Zugkabel befestigt wird.

14. Verfahren nach einem der vorhergehenden Ansprüche, wobei ein vor der Kabeleintrittsöffnung liegender Teil des MP-Tragseils eine Schlaufe umfasst.

15. Verfahren nach einem der vorhergehenden Ansprüche, wobei das Einzugskabel in Schritt e) von einer auf einer Arbeitsplattform des Übergangsstücks bereitgestellten Windeneinrichtung abgerollt wird.

16. Verfahren nach einem der vorhergehenden Ansprüche, wobei das Zugkabel in Schritt e) von einer auf einem Deck eines Kabelverlegeschiffs vorgesehenen Windeneinrichtung, optional über eine auf dem Deck vorgesehene Ankerwinde, eingezogen wird.

17. Verfahren nach einem der Ansprüche 12 bis 16, wobei in Schritt e) das Zugkabel eine derartige Zugkraft auf den unteren und/oder zentralen Befestigungspunkt ausübt, dass mindestens einer von ihnen, vorzugsweise jedoch beide, abbricht.

18. Übergangsstück zur Anwendung im Verfahren nach einem der Ansprüche 1 bis 17, wobei
das Übergangsstück in einem inneren Hohlraum davon ein TP-Tragseil umfasst,
**dadurch gekennzeichnet, dass**
ein unterer Boden des Übergangsstücks nach Verbindung mit einem Anschlag, der an einer inneren Umfangswand des Gründungspfahls vorgesehen ist, einen luftdichten Boden bildet und das TP-Tragseil von einem ersten Befestigungspunkt an einer Oberseite des luftdichten Bodens durch eine verschließbare Öffnung im luftdichten Boden zu einem zweiten Befestigungspunkt an einer Unterseite des luftdichten Bodens verläuft.

19. Übergangsstück nach Anspruch 18, wobei ein oberer Boden des Übergangsstücks konfiguriert ist, um einen Windturbinenturm mit einer Oberseite des Übergangsstücks zu verbinden, und das TP-Tragseil über einen an einer Unterseite des oberen Bodens montierten Hebezug vom ersten Befestigungspunkt durch die verschließbare Öffnung herabhängt.

20. Übergangsstück nach Anspruch 18 oder 19, wobei der luftdichte Boden in der Nähe des zweiten Befestigungspunkts eine Luke umfasst.

21. Gründungspfahl zur Anwendung im Verfahren nach einem der Ansprüche 1 bis 17, wobei
der Gründungspfahl in einem inneren Hohlraum davon ein MP-Tragseil umfasst,
**dadurch gekennzeichnet, dass**
das MP-Tragseil von einem unteren Befestigungspunkt zu einem oberen Befestigungspunkt verläuft, der sich oberhalb eines an einer Umfangswand vorgesehenen inneren Anschlags für einen luftdichten Boden des Übergangsstücks befindet.

22. Gründungspfahl nach Anspruch 21, wobei sich der untere Befestigungspunkt unterhalb einer Kabeleinftrittsöffnung befindet, die an einer Unterseite des Gründungspfahls in einer Umfangswand des Gründungspfahls vorgesehen ist.

23. Gründungspfahl nach Anspruch 21 oder 22, wobei das MP-Tragseil vom unteren Befestigungspunkt durch die Kabeleintrittsöffnung über einen zentralen Befestigungspunkt verläuft, der sich oberhalb der Kabeleintrittsöffnung befindet.

24. Gründungspfahl nach einem der Ansprüche 21 bis 23, wobei ein Überstand des MP-Tragseils über den oberen Befestigungspunkt hinaus bereitgestellt ist.

25. Gründungspfahl nach Anspruch 23 oder 24, wobei der untere und der zentrale Befestigungspunkt eine schwache Verbindung bilden, die unterbrochen werden kann.

26. Gründungspfahl nach einem der Ansprüche 21 bis 25, wobei der Teil des MP-Tragseils, der sich vor der Kabeleintrittsöffnung befindet, eine Schlaufe umfasst.

## Revendications

1. Procédé d'agencement d'un câble électrique dans une fondation d'une éolienne au large en vue d'une connexion à une installation électrique, dans lequel
a) une pièce de transition TP creuse à l'intérieur prévue sur un côté supérieur d'un moyen de montage (bride) pour l'éolienne est connectée à un pieu de fondation MP creux à l'intérieur agencé dans un fond sous-marin ;
b) des extrémités extérieures libres d'un fil porteur de TP agencé dans la pièce de transition et d'un fil porteur de MP agencé dans le pieu de fondation sont connectées entre elles ;
c) le fil porteur de TP est fixé avec une extrémité de câble d'entraînement à un câble d'entraînement ;
d) le fil porteur de MP est fixé avec une extrémité de câble de traction à un câble de traction, descendu sous l'eau à partir d'un navire câblier, par l'intermédiaire d'une ouverture d'entrée de câble prévue sur un côté inférieur du pieu de fondation dans une paroi périphérique du pieu de fondation, et est tiré avec le câble de traction vers le navire câblier ;
e) le fil porteur de MP ou le câble de traction est connecté à un câble électrique présent sur le navire câblier ;
f) les fils porteurs connectés entre eux et le câble électrique sont tirés avec le câble d'entraînement à travers l'ouverture d'entrée du câble dans la fondation jusqu'à ce qu'une longueur du câble électrique ait été placée dans la fondation ;
dans lequel les cavités internes de la pièce de transition et du pieu de fondation sont fournies avant l'étape a) avec respectivement le fil porteur de TP et de MP.

2. Procédé selon la revendication 1, dans lequel les cavités internes de la pièce de transition et du pieu de fondation sont fournies avec respectivement le fil porteur de TP et de MP à terre avant l'étape a).

3. Procédé selon la revendication 1 ou 2, dans lequel le fil porteur de TP et/ou de MP sont agencés avec un excédent dans respectivement la pièce de transition et le pieu de fondation.

4. Procédé selon l'une quelconque des revendications précédentes, dans lequel un plancher inférieur de la pièce de transition forme un plancher étanche après l'étape a) et se connecte à une butée prévue sur une paroi périphérique interne du pieu de fondation, et le fil porteur de TP va d'un premier point de fixation sur un côté supérieur du plancher étanche, à travers une ouverture fermable dans le plancher étanche à un second point de fixation sur un dessous du plancher étanche, dans lequel l'extrémité libre du fil porteur de TP est obtenue en libérant le fil porteur de TP du second point de fixation.

5. Procédé selon la revendication 4, dans lequel le plancher étanche comprend une trappe à proximité du second point de fixation, et le fil porteur de TP est libéré d'un côté supérieur du plancher étanche par l'intermédiaire de la trappe ouverte.

6. Procédé selon l'une quelconque des revendications précédentes, dans lequel le fil porteur de MP s'étend d'un point de fixation inférieur à un point de fixation supérieur qui est situé au-dessus d'une butée interne, prévue sur la paroi périphérique, pour le plancher étanche de la pièce de transition, et l'extrémité extérieure libre du fil porteur de MP est obtenue en libérant le câble transversal de MP du point de fixation supérieur.

7. Procédé selon l'une quelconque des revendications précédentes, dans lequel les fils porteurs de TP et de MP connectés l'un à l'autre à l'étape b) sont tendus dans un état suspendu vers le bas.

8. Procédé selon l'une quelconque des revendications 4 à 7, dans lequel un plancher supérieur de la pièce de transition est conçu pour accoupler une tour d'éolienne à un côté supérieur de la pièce de transition, et le fil porteur de TP pend à partir du premier point de fixation à travers l'ouverture fermable par l'intermédiaire d'un palan monté sur un dessous du plancher supérieur.

9. Procédé selon l'une quelconque des revendications 4 à 8, dans lequel l'extrémité de câble du fil porteur de TP est obtenue en libérant le fil porteur de TP à partir du premier point de fixation.

10. Procédé selon l'une quelconque des revendications précédentes, dans lequel le fil porteur de MP s'étend à un point de fixation inférieur qui est situé en dessous de l'ouverture d'entrée de câble, et l'extrémité de câble de traction du câble transversal de MP est obtenue à l'étape d) en libérant le fil porteur de MP à partir du point de fixation inférieur.

11. Procédé selon la revendication 10, dans lequel le fil porteur de MP traverse l'ouverture d'entrée de câble, entre le point de fixation inférieur et un point de fixation médian situé au-dessus de l'ouverture d'entrée de câble, et l'extrémité de câble de traction du fil porteur de MP est obtenue à l'étape d) en libérant également le câble transversal de MP à partir du point de fixation médian.

12. Procédé selon la revendication 10 ou 11, dans lequel le point de fixation inférieur et/ou médian forment une faible liaison qui peut être rompue, et le fil porteur de MP est libéré du point de fixation inférieur et/ou médian en rompant le point de fixation inférieur et/ou médian.

13. Procédé selon l'une quelconque des revendications précédentes, dans lequel le fil porteur de MP est fixé avec l'extrémité de câble de traction au câble de traction à l'étape d) au moyen d'un outil télécommandé (ROV).

14. Procédé selon l'une quelconque des revendications précédentes, dans lequel une partie du fil porteur de MP qui se trouve devant l'ouverture d'entrée de câble comprend une boucle.

15. Procédé selon l'une quelconque des revendications précédentes, dans lequel le câble d'entraînement est déroulé à l'étape e) à partir d'un équipement de treuil prévu sur une plate-forme de travail de la pièce de transition.

16. Procédé selon l'une quelconque des revendications précédentes, dans lequel le câble de traction est intégré à l'étape e) à partir d'un équipement de treuil prévu sur un pont d'un navire câblier, éventuellement par l'intermédiaire d'un cabestan prévu sur le pont.

17. Procédé selon l'une quelconque des revendications 12 à 16, dans lequel à l'étape e) le câble de traction exerce une telle force de traction sur le point de fixation inférieur et/ou médian qu'au moins l'un d'entre eux rompt, et de préférence les deux.

18. Pièce de transition pour application dans le procédé selon l'une quelconque des revendications 1 à 17, dans laquelle la pièce de transition comprend dans une cavité interne de celle-ci un fil porteur de TP, **caractérisée en ce qu'**un plancher inférieur de la pièce de transition forme un plancher étanche après liaison à une butée prévue sur une paroi périphérique interne du pieu de fondation, et le fil porteur de TP va d'un premier point de fixation sur un côté supérieur du plancher étanche, à travers une ouverture fermable dans le plancher étanche à un second point de fixation sur un dessous du plancher étanche.

19. Pièce de transition selon la revendication 18, dans laquelle un plancher supérieur de la pièce de transition est conçu pour accoupler une tour d'éolienne à un côté supérieur de la pièce de transition, et le fil porteur de TP pend à partir du premier point de fixation à travers l'ouverture fermable par l'intermédiaire d'un palan monté sur un dessous du plancher supérieur.

20. Pièce de transition selon la revendication 18 ou 19, dans laquelle le plancher étanche comprend une trappe à proximité du second point de fixation.

21. Pieu de fondation pour application dans le procédé selon l'une quelconque des revendications 1 à 17, dans lequel le pieu de fondation comprend dans une cavité interne de celui-ci un fil porteur de MP, **caractérisé en ce que** le fil porteur de MP s'étend depuis un point de fixation inférieur à un point de fixation supérieur qui est situé au-dessus d'une butée interne, prévue sur une paroi périphérique, pour un plancher étanche de la pièce de transition.

22. Pieu de fondation selon la revendication 21, dans lequel le point de fixation inférieur est situé en dessous d'une ouverture d'entrée de câble prévue sur un côté inférieur du pieu de fondation dans une paroi périphérique du pieu de fondation.

23. Pieu de fondation selon la revendication 21 ou 22, dans lequel le fil porteur de MP va du point de fixation inférieur à travers l'ouverture d'entrée de câble en passant par un point de fixation médian qui est situé au-dessus de l'ouverture d'entrée de câble.

24. Pieu de fondation selon l'une quelconque des revendications 21 à 23, dans lequel un excédent du fil porteur de MP est prévu au-delà du point de fixation supérieur.

25. Pieu de fondation selon la revendication 23 ou 24, dans lequel le point de fixation inférieur et médian forment une faible liaison qui peut être rompue.

26. Pieu de fondation selon l'une quelconque des revendications 21 à 25, dans lequel la partie du fil porteur de MP qui est située devant l'ouverture d'entrée de câble comprend une boucle.
